# EUROPEAN PATENT SPECIFICATION

(11) **EP 4 245 712 B1**
(45) Date of publication and mention of the grant of the patent: **21.10.2026**
(21) Application number: 23190788.2
(22) Date of filing: 20.07.2021
(51) Int. Cl.: E04B 1/00, F16B 2/10, B25B 5/06, B66C 1/42, B66C 1/66, F16B 7/22

(54) **DEVICE AND METHOD FOR BALCONY ATTACHMENT TO FAÇADE**
VORRICHTUNG UND VERFAHREN ZUR BALKONBEFESTIGUNG AN EINER FASSADE
DISPOSITIF ET PROCÉDÉ DE FIXATION DE BALCON À UNE FAÇADE

(30) Priority: 31.05.2021 LT 2021525
(43) Date of publication of application: 20.09.2023
(62) Document number(s) of the earlier application(s) in accordance with Art. 76 EPC: 21186677.7 / 4 098 818
(73) Proprietor: Staticus, UAB, 02190 Vilnius (LT)
(72) Inventor: Radkevicius, Karolis, 08217 Vilnius (LT); Gudaitis, Vaidas, 08217 Vilnius (LT); Masickas, Tadas, 09312 Vilnius (LT)
(74) Representative: Zaboliene, Reda

(56) References cited:
- GB-A- 2 577 113
- US-A1- 2018 274 305

## Description

### Pertinent Art

The invention is related to the building structures, specifically to the devices and methods of balcony attachment.

### State of Art

The balcony is one of the most complex building structures. Its attachment to a building must be quick and convenient, and meet strict safety requirements. As a result, the balcony structures, their attachment methods and the devices used for this purpose are constantly being improved.

The patent document WO2014174269A1 (published 30/10/2014) provides for a balcony structure, a method and a tool kit for attaching a balcony to a building or an existing structure. One aspect of the invention provides for the balcony for attachment to an existing structure, where the said structure has a plurality of stubs fitted thereto, each stub having a first engagement portion, the balcony having a plurality of second engagement portions on one side of the balcony wherein the first and second engagement portions are arranged to engage with each other so as to cause the weight of the balcony to be supported by the existing structure and the balcony to be securely attached to the structure.

The patent document WO2016178016A1 (published on 10/11/2016) provides a fixing for attaching a balcony to a support, which allows for significant accommodation of the construction tolerances in the installation of the support, whilst still securely attaching the balcony to the support. In one embodiment, the fixing includes: a connector section; a clamping section for securing the fixing to the support by clamping at least part of the support between the clamping section and the connector section, the clamping section being adjustably attachable to the connector section by at least one first fastener; a support section for supporting the balcony relative to the support, the support section being adjustably attached to and separated from the connector section by at least one second fastener; and at least one third fastener for securing the balcony to the fixing. The invention also provides a balcony and a method of installing the balcony which allow the pitch of the balcony to be adjusted once installed and secured in place, preferably only through access from the underneath of the balcony.

The closest patent document GB2577113A (published on 18/03/2020) provide for the method of installing a balcony to a building façade by aligning the balcony, preferably having a support beam, with a projection of the façade, preferably I-beam stub, such that an activatable tapered shaft or skewer, attached to the balcony, is aligned with the socket in the projection, driving the shaft through the socket to correctly locate and secure the balcony to the façade, then locking the balcony to the façade using further fixings. The shaft may be operated by an electric, pneumatic or hydraulic actuator. The actuator and the shaft may be removed after the balcony is secured to the projection with the fixings. There may be a joining plate attached to the balcony for extending over a gap between the balcony and the stub, the plate having an aperture. The invention also presents an activatable balcony fixing including a tapered shaft, actuator and mount, as well as a balcony and a kit of parts.

The closest patent document US2018/274305 A1 (published on 27/9/2018) provides a rod and casing handler according to embodiments of the present disclosure includes a boom mount that is configured to be coupled to a boom. A clamp mounting structure is coupled to the boom mount and has a central portion, a first arm, and a second arm, where each arm extends from the central portion. A first clamp is coupled to the first arm and includes a first set of actuatable tongs and a first removable saddle plate. A second clamp is coupled to the second arm, and it includes a second set of actuatable tongs and a second removable saddle plate. The first removable saddle plate has a first arcuate surface sized and shaped to correspond to a cylindrical body having a first diameter, and the second saddle plate has a second arcuate surface sized and shaped to correspond to a cylindrical body having a second diameter. This invention is not intended to attach to something, only to grasp and transfer objects.

The present invention differs from the above-mentioned patents in that it provides an alternative method of attaching a balcony by use of a special device.

### Summary of the Invention

As used further herein, the term "balcony" includes various types of balconies as well as other cantilever structures that transmit loads to the building structure, such as marking signs, external photovoltaic structures, heat collectors, accessory holders, arch covers, sun protection systems, plant pots, screens and similar structures that cross the façade of the building and whose load is transferred directly to the structure of the building.

This description presents a new method of balcony attaching to a façade and a device designed for that purpose. The method of attaching of the balcony includes the following steps: the balcony is lifted to the required height; the balcony beams are brought to the façade cantilevers using guide plates by aligning the balcony both horizontally and vertically; the balcony beams are attached to the lugs of the fastening cantilever by means of the balcony attaching device, where upon activation of the actuator of the balcony attaching device, which is connected to a scissor mechanism, the latter clamps on the fastening lug; then the balcony beams are fastened to the cantilevers by means of connecting elements. The balcony attaching device is mounted on at least two balcony beams. The balcony includes load-bearing beams, a frame, a partition/handrail, and finishing materials.

The balcony attaching device comprises of: a housing; an actuator in the housing; a scissor mechanism connected to the actuator by a sliding element; at least two latches attached to the rear of the housing for securing the housing to a guide plate. The scissor mechanism is operated by an electric or hydraulic, or pneumatic actuator and includes: at least a pair of scissors; a central fastening element with at least the pair of scissors; connecting elements, one end of which is connected to the sliding element and the other end - to the scissors.

The presented method of the balcony attachment by means of the balcony attaching device does not require additional lifting devices for lifting of persons attaching the balcony to the façade. This method also allows for fitting a fully finished balcony structure to a building with minimal resources.

### Brief Description of Drawings

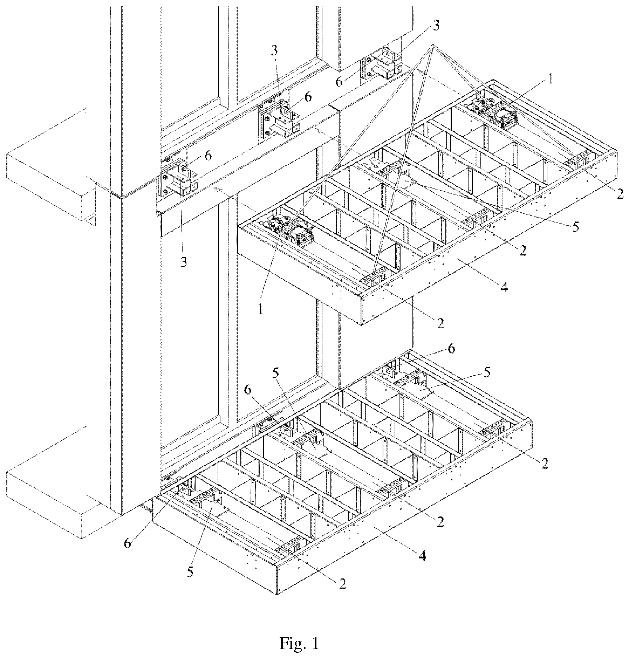

Fig. 1 Isometric view of attaching the balcony to the façade.
Fig. 2 Isometric view of the balcony beam attachment to the cantilever.
Fig. 3 Isometric view of the balcony attaching device connected to the balcony beam. Fig. 4 Isometric view of the balcony attaching device with additional fastening plates. Fig. 5 Isometric view of the scissor mechanism of the balcony attaching device.

The presented figures are rather of an illustrative nature, therefore their scale, proportions, and other aspects do not necessarily correspond precisely to the actual technical solution.

### Description of the Preferred Embodiments

This description includes the new method for balcony attachment to a façade and the device designed for that purpose. The balcony attachment method includes the following steps:
the balcony (4) is lifted to the required height;
the balcony beams (2) are brought to the cantilevers (3), secured to the façade, by means of the guide plates (5), attached to the balcony beams (2), so that the balcony (4) is aligned both horizontally and vertically;
the balcony beams (2) are fixed to the fixing lugs (6), attached to the cantilevers (3), by means of the balcony attaching device (1), where upon activation of the actuator (7) of the balcony attaching device (1), which is connected to a scissor mechanism (11), the later clamps on the fastening lug (3);
the balcony beams (2) are further fastened to the cantilevers (3) by means of connecting elements.

The balcony (4) includes at least load-bearing beams, a frame, a partition/handrail, and finishing materials. The balcony (4) is manufactured and assembled at the factory, and delivered to the construction site.

The balcony (4) is lifted to the required height by a crane or another lifting machine and brought to the façade cantilevers (3) by use of guiding equipment, such as ropes, straps, slings, etc.

The cantilevers (3) with the fixing lugs (6) attached to them are pre-prepared and attached to the façade on site.

The balcony attaching device (1) is mounted on at least two balcony beams (2), where before lifting the balcony to the required height, the scissor mechanism (11) of the device (1) is set to its initial position, in which the pair of scissors (16) is opened. Upon bringing of the balcony beams (2) to the cantilevers (3) by means of guide plates (5), the actuator (7) of the balcony attaching device (1) connected to the scissor mechanism (11) is activated and the latter is set to its end position in which the pair of scissors ( 16) clamps over the aperture of the fixing lug (6), where the fixing lug (6) is attached to the cantilever (3). **In** the front part of the guide plate (5), there is an Y- shaped notch that aligns the balcony beam (2) with the cantilever by covering the fixing lug (6). Upon attaching of the balcony (4) to the façade by means of the balcony attaching device (1), a safety information equipment (indicator) is activated and informs that the persons attaching the balcony are allowed to climb on the balcony. The said safety information mechanism may be a sensor of the shaft motion or a coloured arrow. Upon climbing on the balcony, the persons fasten the attached balcony beams (2) to the cantilevers (3) with the fasteners, such as bolts, pins, etc., and detach the hook of the crane or another lifting machine as well as remove the balcony attaching device (1). The balcony beam (2) is fastened to the cantilever by fastening elements on a bottom part, where the fastening plates with apertures are provided in the front parts both of the beam (2) and the cantilever (3), and in the upper part, where the apertures are provided on both sides in the front part of the guide plate and on both sides of the upper part of the cantilever. Until the balcony

(4) is mechanically fixed to the façade, access to the balcony (4) being attached is prohibited due to safety requirements.

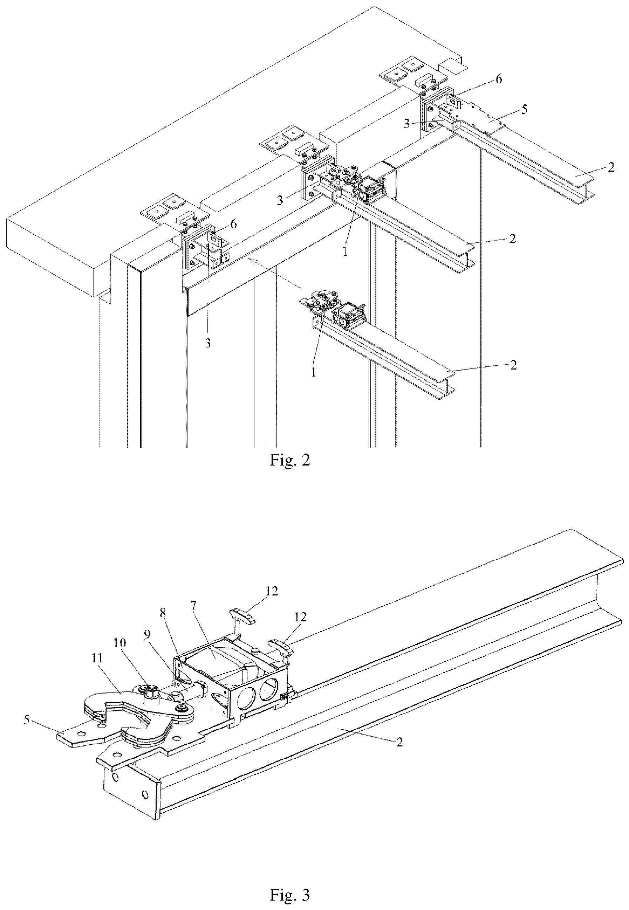

The balcony attaching device (1) designed for attaching the balcony (4) to a façade comprises (Fig. 3):
a housing (8),
an actuator (7) enclosed in the housing,
at least two latches (12) attached in the rear part of the housing (8) intended for fastening of the housing (8) to the guide plate (5),
a scissor mechanism (11) connected to the electric actuator (7) by a sliding element (9), where upon activation of the actuator (7), the scissor mechanism (11) clamps on the fixing lug
(6) attached to the cantilever (3).

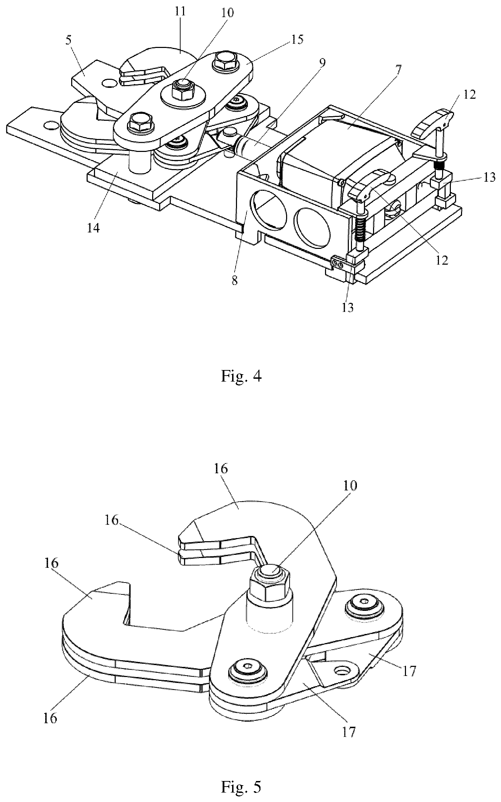

The balcony attaching device (1) is fitted to the balcony beam via the guide plate (5) that is tightly secured to the beam (2) The device (1) is fastened to the front part of the guide plate (5) by means of the central fastening element (10), such as a bolt or a pin. The device (1) can be fastened to the front part of the guide plate (5) by means of the upper (15) and the lower (14) plates arranged parallel to each other, where both said plates have the fixing apertures at their ends, which coincide with the apertures at the edges of the guide plate (5) (Fig. 4). The device (1) is fastened to the rear part of the housing (8) by the notches of the side walls, which are locked in the grooves present on both sides at the end of the guide plate. The notches in the side walls of the housing (8) are fixed in the grooves by at least two latches (12) fitted at the rear part of the housing (8). Upon pressing the latch (12) in the vertical direction downwards, it presses the pin (13) attached to the housing
(8) and the said pin (13) pushes the housing (8) forward until the notches on its side walls are locked in the grooves of the guide plate (5), thereby pushing the scissor mechanism (11) until its central aperture is aligned with the aperture on the fixing plate (5), and in case where the upper
(15) and the lower (14) fixing plates are used, the fixing apertures of these plates are aligned with the fixing apertures of the guide plate (5). Upon pressing the latch (12) in the vertical direction upwards, the pin (13) is released and the device (1) can be removed from the guide plate (5) after releasing the central fastening element (10) or the fasteners by which the upper (15) and the lower
(14) fixing plates are fixed to the guide plate (5).

The scissor mechanism (11) comprises (Fig. 5): at least a pair of scissors (16) arranged symmetrically with respect to the vertical axis of a central fastening element (10); the central fastening element (10) with at least the pair of scissors (16); the connecting pieces (17), one end of which is attached to the sliding element (9) and the other end - to the parts of scissors (16).

A part of scissors (16) is an elongate flat element with one folded end and the apertures for fixing it to the central fastening element (10) and the connecting piece (17) as well as to the other part of scissors.

The scissor mechanism (11) is operated by an actuator (7) connected through a sliding mechanism (9), one end of which is connected to the actuator (7), the other - to the connecting pieces (17) connected to the parts of scissors (16). The said actuator (7) is an electric or hydraulic, or pneumatic actuator. When the actuator (7) is activated, the sliding element (9) moves in the longitudinal direction, thus affecting the connecting pieces (17), which change the position of the parts of scissors (16). The connecting pieces (17) and the parts of scissors (16) are connected to each other by fasteners.

In order to illustrate and describe the present invention, a description of the best options for implementation is provided above. This description is neither exhaustive nor limiting and is not intended to determine the exact form or version of implementation. The above description should be considered as an illustration rather than as a limitation. Obviously, many modifications and variations may be evident to those skilled in the art. The option of implementation is selected and described in order to help those skilled in the art to understand better the principles of the present invention and find the best practical fit for various options of implementation with different modifications to suit a particular use or application. It is provided that the scope of invention is defined by the claims.

The options of implementation described by those skilled in the art may include modifications without departing from the scope of the present invention, as defined in the claims below.

## Claims

1. Attaching device (1) for fitting a cantilever structure (4) to a building façade, comprising:
a housing (8),
an electric or hydraulic or pneumatic actuator (7) enclosed in the housing (8),
a guide plate (5) configured to be tightly secured to the beam (2) of the cantilever structure (4),
at least two latches (12) attached in the rear part of the housing (8) intended for fastening of the housing (8) to a guide plate (5);
a scissor mechanism (11) connected to said actuator (7) by a sliding element (9),
and where, upon activation of the actuator (7), the scissor mechanism (11) can clamp on a fixing lug (6) attached to the cantilever (3) of the building.

2. Attaching device (1) according to claim 1, **characterised in that** the scissor mechanism (11) comprises: at least a pair of scissors (16) arranged symmetrically with respect to the vertical axis of a central fastening element (10); connecting pieces (17), one end of which is attached to the sliding element (9) and the other end - to the parts of scissors (16).

3. A method for attaching a cantilever structure (4) to a building using attaching device (1) comprising the following steps:
the cantilever structure (4) is lifted to the required height,
bringing the beams (2) of the cantilever structure (4) to the cantilevers (3), secured to the facade of the building, by means of guide plates (5), attached to the beams (2), so that the cantilever structure (4) is aligned both horizontally and vertically with the cantilevers (3);
fastening the beams (2) of the cantilever structure to the cantilevers (3) by means of connecting elements,
**characterized in that** the beams (2) of the cantilever structure (4) attaching to the fixing lugs (6), attached to the cantilevers (3), by means of the attaching device (1) according to any of the preceding claims.

4. The method of attaching according to claim 3, **characterised** of that upon attaching of the cantilever structure (4) to the façade by means of the balcony attaching device (1), a safety information equipment, e.g. indicator is activated and informs that the persons attaching the balcony are allowed to climb on the balcony to finish the attachment works.

5. The method of attaching according to claims 3 and 4, **characterised in that** the balcony attaching device (1) is mounted on at least two beams (2) of the cantilever structure, where before lifting the structure to the required height, the scissor mechanism (11) of the device (1) is set to its initial position, in which the pair of scissors (16) is opened.

## Patentansprüche

1. Eine Befestigungsvorrichtung (1) zur Montage einer Kragstruktur (4) an einer Gebäudefassade, umfassend:
ein Gehäuse (8),
einen in dem Gehäuse (8) eingeschlossenen elektrischen, hydraulischen oder pneumatischen Aktor (7),
eine Führungsplatte (5), die ausgebildet ist, um fest an dem Träger (2) der Kragstruktur (4) befestigt zu werden,
mindestens zwei im hinteren Teil des Gehäuses (8) angebrachte Riegel (12), die zur Befestigung des Gehäuses (8) an einer Führungsplatte (5) bestimmt sind;
einen Scherenmechanismus (11), der durch ein Schiebeelement (9) mit dem besagten Aktor (7) verbunden ist, und wobei sich der Scherenmechanismus (11) bei Aktivierung des Aktors (7) an einer an der Konsole (3) des Gebäudes befestigten Befestigungsöse (6) festklemmen kann.

2. Die Befestigungsvorrichtung (1) nach Anspruch 1, **dadurch gekennzeichnet, dass** der Scherenmechanismus (11) Folgendes umfasst: mindestens ein Scherenpaar (16), das symmetrisch in Bezug auf die vertikale Achse eines zentralen Befestigungselements (10) angeordnet ist; Verbindungsstücke (17), deren eines Ende an dem Schiebeelement (9) und deren anderes Ende - an den Scherenteilen (16) befestigt ist.

3. Ein Verfahren zur Befestigung einer Kragstruktur (4) an einem Gebäude unter Verwendung einer Befestigungsvorrichtung (1), umfassend die folgenden Schritte:
die Kragstruktur (4) wird auf die erforderliche Höhe angehoben,
Heranführen der Träger (2) der Kragstruktur (4) an die an der Fassade des Gebäudes befestigten Konsolen (3) mittels der an den Trägern (2) befestigten Führungsplatten (5), sodass die Kragstruktur (4) sowohl horizontal als auch vertikal auf die Konsolen (3) ausgerichtet ist;
Befestigen der Träger (2) der Kragstruktur an den Konsolen (3) mittels Verbindungselementen,
**dadurch gekennzeichnet, dass**
die Träger (2) der Kragstruktur (4) an den an den Konsolen (3) befestigten Befestigungsösen (6) mittels der Befestigungsvorrichtung (1) nach einem der vorhergehenden Ansprüche befestigt werden.

4. Das Verfahren zur Befestigung nach Anspruch 3, **dadurch gekennzeichnet, dass** bei der Befestigung der Kragstruktur (4) an der Fassade mittels der Vorrichtung zur Balkonbefestigung (1) eine Sicherheitsinformationsausrüstung, z.B. ein Indikator, aktiviert wird und darüber informiert, dass die den Balkon befestigenden Personen auf den Balkon steigen dürfen, um die Befestigungsarbeiten abzuschließen.

5. Das Verfahren zur Befestigung nach den Ansprüchen 3 und 4, **dadurch gekennzeichnet, dass** die Vorrichtung zur Balkonbefestigung (1) an mindestens zwei Trägern (2) der Kragstruktur montiert ist, wobei vor dem Anheben der Struktur auf die erforderliche Höhe der Scherenmechanismus (11) der Vorrichtung (1) in seine Ausgangsposition versetzt wird, in der das Scherenpaar (16) geöffnet ist.

## Revendications

1. Un dispositif de fixation (1) pour monter une structure en porte-à-faux (4) sur une façade de bâtiment, comprenant:
un boîtier (8),
un actionneur électrique ou hydraulique ou pneumatique (7) enfermé dans le boîtier (8),
une plaque de guidage (5) configurée pour être solidement fixée à la poutre (2) de la structure en porte-à-faux (4),
au moins deux loquets (12) fixés dans la partie arrière du boîtier (8) destinés à la fixation du boîtier (8) à une plaque de guidage (5);
un mécanisme à ciseaux (11) relié audit actionneur (7) par un élément coulissant (9), et où, lors de l'activation de l'actionneur (7), le mécanisme à ciseaux (11) peut se serrer sur une patte de fixation (6) fixée à la console (3) du bâtiment.

2. Le dispositif de fixation (1) selon la revendication 1, **caractérisé en ce que** le mécanisme à ciseaux (11) comprend: au moins une paire de ciseaux (16) disposés symétriquement par rapport à l'axe vertical d'un élément de fixation central (10); des pièces de liaison (17), dont une extrémité est fixée à l'élément coulissant (9) et l'autre extrémité - aux parties des ciseaux (16).

3. Un procédé de fixation d'une structure en porte-à-faux (4) à un bâtiment en utilisant un dispositif de fixation (1) comprenant les étapes suivantes:
la structure en porte-à-faux (4) est soulevée à la hauteur requise,
amener les poutres (2) de la structure en porte-à-faux (4) jusqu'aux consoles (3), fixées à la façade du bâtiment, au moyen de plaques de guidage (5), fixées aux poutres (2), de sorte que la structure en porte-à-faux (4) soit alignée à la fois horizontalement et verticalement avec les consoles (3);
fixer les poutres (2) de la structure en porte-à-faux aux consoles (3) au moyen d'éléments de liaison,
**caractérisé en ce que**
les poutres (2) de la structure en porte-à-faux (4) se fixent aux pattes de fixation (6), fixées aux consoles (3), au moyen du dispositif de fixation (1) selon l'une quelconque des revendications précédentes.

4. Le procédé de fixation selon la revendication 3, **caractérisé en ce que**, lors de la fixation de la structure en porte-à-faux (4) à la façade au moyen du dispositif de fixation de balcon (1), un équipement d'information de sécurité, par ex. un indicateur, est activé et informe que les personnes fixant le balcon sont autorisées à monter sur le balcon pour terminer les travaux de fixation.

5. Le procédé de fixation selon les revendications 3 et 4, **caractérisé en ce que** le dispositif de fixation de balcon (1) est monté sur au moins deux poutres (2) de la structure en porte-à-faux, où, avant de soulever la structure à la hauteur requise, le mécanisme à ciseaux (11) du dispositif (1) est réglé à sa position initiale, dans laquelle la paire de ciseaux (16) est ouverte.
